(19) Europäisches Patentamt / European Patent Office / Office européen des brevets

(11) **EP 4 127 528 B1**

(12) **EUROPÄISCHE PATENTSCHRIFT**

(45) Veröffentlichungstag und Bekanntmachung des Hinweises auf die Patenterteilung:
**30.10.2024   Patentblatt 2024/44**

(21) Anmeldenummer: **21702419.9**

(22) Anmeldetag: **26.01.2021**

(51) Internationale Patentklassifikation (IPC):
***F16J 15/34*** *(2006.01)*

(52) Gemeinsame Patentklassifikation (CPC):
**F16J 15/3412**

(86) Internationale Anmeldenummer:
**PCT/EP2021/051691**

(87) Internationale Veröffentlichungsnummer:
**WO 2021/190802 (30.09.2021 Gazette 2021/39)**

(54) **GLEITRINGDICHTUNG MIT VERBESSERTER NUTANORDNUNG**

SLIDE RING SEAL WITH IMPROVED GROOVE ARRANGEMENT

JOINT D'ÉTANCHÉITÉ À BAGUE DE GLISSEMENT À AGENCEMENT DE RAINURE AMÉLIORÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.03.2020   DE 102020203764**

(43) Veröffentlichungstag der Anmeldung:
**08.02.2023   Patentblatt 2023/06**

(73) Patentinhaber: **EagleBurgmann Germany GmbH & Co. KG**
**82515 Wolfratshausen (DE)**

(72) Erfinder:
• **LANG, Klaus**
  **82547 Eurasburg (DE)**
• **ZAUNER, Thomas**
  **82049 Pullach (DE)**

(74) Vertreter: **Hoefer & Partner Patentanwälte mbB**
**Pilgersheimer Straße 20**
**81543 München (DE)**

(56) Entgegenhaltungen:
EP-A1- 0 672 852    EP-A1- 0 870 956
EP-A2- 1 054 196    JP-A- 2019 015 401
US-A- 3 957 276

## Beschreibung

Die vorliegende Erfindung betrifft eine Gleitringdichtung, insbesondere eine Gleitringdichtung für gasförmige Medien, mit einer verbesserten Nutanordnung von Nuten in den Gleitflächen der Gleitringe.

Gleitringdichtungen mit Nuten sind aus dem Stand der Technik in unterschiedlichen Ausgestaltungen bekannt. Insbesondere bei Gasdichtungen, welche gasförmige Medien abdichten, sind Fördernuten in einer Gleitfläche des rotierenden Gleitrings bekannt. Diese Fördernuten dienen insbesondere dazu, bei einem Anfahren einer abzudichtenden Maschine ein schnelles Abheben der Gleitflächen der Gleitringdichtung voneinander zu ermöglichen. Dadurch wird erreicht, dass kurz nach dem Beginn der Rotation ein Druckanstieg im Dichtspalt zwischen dem rotierenden und dem stationären Gleitring erzeugt wird, welcher für ein schnelles Abheben der Gleitflächen voneinander für einen berührungslosen Lauf der Gleitringdichtung sorgt. Dadurch wird eine mögliche Leckage während eines Anfahrens der abzudichtenden Maschine möglichst auf ein Minimum reduziert.

Aus der US 3,957,276 A ist eine Gleitringdichtung bekannt, welche Sacklöcher in den Gleitflächen der Gleitringe offenbart.

Es wäre daher wünschenswert, dass ein Abheben der Gleitringe auch schon bei kleinsten Drehzahlen möglich ist.

Es ist daher Aufgabe der vorliegenden Erfindung, eine Gleitringdichtung mit einem rotierenden und einem stationären Gleitring bereitzustellen, welche bei einfachem Aufbau und einfacher, kostengünstiger Herstellbarkeit ein schnelles Abheben der Gleitflächen der Gleitringe aus einem Stillstand ermöglicht.

Diese Aufgabe wird durch eine Gleitringdichtung mit den Merkmalen des Anspruchs 1 oder 3 gelöst. Die Unteransprüche zeigen bevorzugte Weiterbildungen der Erfindung.

Die erfindungsgemäße Gleitringdichtung mit den Merkmalen des Anspruchs 1 oder 3 ermöglicht ein schnelles Abheben von Gleitflächen des rotierenden und stationären Gleitrings voneinander aus einer Stillstandsposition heraus. Ferner weist die Gleitringdichtung eine verbesserte Abdichtwirkung auch gegenüber hohen Drücken und insbesondere einen sehr schnellen Druckaufbau bei Rotationsbeginn im Dichtspalt zwischen dem rotierenden und stationären Gleitring auf. Somit tritt auch beim Beginn einer Rotation der Gleitringdichtung praktisch keine Leckage über den Dichtspalt auf, da ein sehr schneller Druckaufbau ermöglicht wird.

Dies wird gemäß Anspruch 1 dadurch erreicht, dass die Gleitringdichtung einen rotierenden und stationären Gleitring aufweist, welche zwischen sich einen Dichtspalt definieren. Dabei weist einer der Gleitringe, insbesondere der rotierende Gleitring, eine erste Reihe einer Vielzahl von ersten Nuten mit einem Fußbereich auf einem ersten Radius R1 und einem Kopfbereich auf einem zweiten Radius R2 auf. Der andere der Gleitringe, insbesondere der stationäre Gleitring, weist wenigstens eine zweite Reihe einer Vielzahl von zweiten Nuten mit einem Fußbereich auf einem dritten Radius R3 und einem Kopfbereich auf einem vierten Radius R4 auf. Somit weisen sowohl der rotierende als auch der stationäre Gleitring jeweils umlaufend angeordnete Nuten auf. Die Kopfbereiche der Nuten sind in Richtung des abzudichtenden Mediums gerichtet. Dabei ist zwischen den Kopfbereichen der radial äußersten Reihe von ersten Nuten des einen Gleitrings und einem äußeren Radialrand dieses Gleitrings ein erster umlaufender Gleitbereich vorhanden. Zwischen den Kopfbereichen der radial äußersten Reihe von zweiten Nuten des anderen Gleitrings und einem äußeren Radialrand dieses Gleitrings ist ein zweiter umlaufender Gleitbereich vorhanden. Somit weisen die Gleitflächen der beiden Gleitringe jeweils einen benachbart zum äußeren Radialrand umlaufenden Gleitbereich auf, in welchem keine Nuten oder dgl. vorgesehen sind. Dadurch bilden diese beiden Gleitbereiche benachbart zu den äußeren Radialrändern einen Dichtdamm, welcher insbesondere im Stillstand der Gleitringdichtung, abdichtend wirkt. Die Radien der Fußbereiche und Kopfbereiche sind dabei derart gewählt, dass der erste Radius R1 der Fußbereiche der ersten Nuten kleiner ist als der dritte Radius R3 der Fußbereiche der zweiten Nuten. Weiterhin ist der zweite Radius R2 der Kopfbereiche der ersten Nuten kleiner als der vierte Radius R4 der Kopfbereiche der zweiten Nuten. Dadurch wird sichergestellt, dass bei Rotation ein stufenweiser Druckaufbau im Dichtspalt in Richtung des abzudichtenden Mediums vorhanden ist. Der Druckaufbau erfolgt dabei in Richtung des abzudichtenden Mediums. Dadurch kann im Betrieb auf schnelle Weise auch schon bei geringen Drehzahlen, welche bei einem Anlaufen der Gleitringdichtung aus dem Stillstand auftreten, Druckfelder zwischen den Gleitflächen aufgebaut werden, welche insbesondere ein in Umfangsrichtung ringförmig geschlossenes Druckfeld bilden. Da das umlaufend geschlossene Druckfeld sehr schnell aufgebaut wird, tritt auch bei einem Anlaufen der Gleitringdichtung aus dem Stillstand nur eine minimale Leckage auf, selbst wenn ein Druckunterschied zwischen dem abzudichtenden Medium und der Atmosphärenseite mehrere $100 \times 10^5$ Pa aufweist.

Eine weitere Unterstützung zum schnellen Druckaufbau ist möglich, da die ersten und/oder zweiten Nuten eine Tiefe aufweisen, welche sich vom Fußbereich zum Kopfbereich ändert.

Dabei wird die Tiefe vom Fußbereich zum Kopfbereich kleiner. Besonders bevorzugt nimmt die Tiefe in Richtung zum Kopfbereich der Nuten kontinuierlich ab. Alternativ nimmt die Tiefe vom Fußbereich zum Kopfbereich stufenförmig ab. Weiter bevorzugt ist ein tangentialer Übergang des Kopfbereichs auf die Gleitfläche des Gleitrings vorgesehen.

Weiter bevorzugt ist der vierte Radius R4, auf welchem die Kopfbereiche der zweiten Nuten angeordnet sind, um maximal 20% größer als der zweite Radius R2, auf welchem die Kopfbereiche der ersten Nuten angeordnet sind. Dadurch kann eine Überdeckung der Nuten der Gleitringe erreicht werden, so dass sich ein besonders schneller, stufenartiger Druckaufbau ergibt, welcher eine schnelle Abdichtung der Gleitringdichtung nach einem Start der Gleitringdichtung ermöglicht. Besonders bevorzugt ist der vierte Radius um max. 10% größer als der zweite Radius.

Gemäß Anspruch 3 werden die erfindungsgemäßen Vorteile dadurch erreicht, dass die Gleitringdichtung einen rotierenden und stationären Gleitring aufweist, welche zwischen sich einen Dichtspalt definieren. Dabei weist einer der Gleitringe, insbesondere der rotierende Gleitring, eine erste Reihe einer Vielzahl von ersten Nuten mit einem Fußbereich auf einem ersten Radius R11 und einem Kopfbereich auf einem zweiten Radius R12 auf. Der andere der Gleitringe, insbesondere der stationäre Gleitring, weist wenigstens eine zweite Reihe einer Vielzahl von zweiten Nuten mit einem Fußbereich auf einem dritten Radius R13 und einem Kopfbereich auf einem vierten Radius R14 auf. Somit weisen sowohl der rotierende als auch der stationäre Gleitring jeweils umlaufend angeordnete Nuten auf. Die Kopfbereiche der Nuten sind in Richtung des abzudichtenden Mediums gerichtet. Dabei ist zwischen den Kopfbereichen der radial innersten Reihe von ersten Nuten des einen Gleitrings und einem inneren Radialrand dieses Gleitrings ein erster umlaufender Gleitbereich vorhanden. Zwischen den Kopfbereichen der radial innersten Reihe von zweiten Nuten des anderen Gleitrings und einem inneren Radialrand dieses Gleitrings ist ein zweiter umlaufender Gleitbereich vorhanden. Somit weisen die Gleitflächen der beiden Gleitringe jeweils einen benachbart zum inneren Radialrand umlaufenden Gleitbereich auf, in welchem keine Nuten oder dgl. vorgesehen sind. Dadurch bilden diese beiden Gleitbereiche benachbart zu den inneren Radialrändern einen Dichtdamm, welcher insbesondere im Stillstand der Gleitringdichtung, abdichtend wirkt. Die Radien der Fußbereiche und Kopfbereiche sind dabei derart gewählt, dass der erste Radius R11 der Fußbereiche der ersten Nuten größer ist als der dritte Radius R13 der Fußbereiche der zweiten Nuten. Weiterhin ist der zweite Radius R12 der Kopfbereiche der ersten Nuten größer als der vierte Radius R14 der Kopfbereiche der zweiten Nuten. Dadurch wird sichergestellt, dass bei Rotation ein stufenweiser Druckaufbau im Dichtspalt in Richtung des abzudichtenden Mediums, welches sich an der radialen Innenseite befindet, vorhanden ist. Der Druckaufbau erfolgt dabei ebenfalls in Richtung des abzudichtenden Mediums. Dadurch kann im Betrieb auf schnelle Weise auch schon bei geringen Drehzahlen, welche bei einem Anlaufen der Gleitringdichtung aus dem Stillstand auftreten, Druckfelder zwischen den Gleitflächen aufgebaut werden, welche insbesondere ein in Umfangsrichtung ringförmig geschlossenes Druckfeld bilden. Da das umlaufend geschlossene Druckfeld sehr schnell aufgebaut wird, tritt auch bei einem Anlaufen der Gleitringdichtung aus dem Stillstand nur eine minimale Leckage auf, selbst wenn ein Druckunterschied zwischen dem abzudichtenden Medium und der Atmosphärenseite mehrere $100 \times 10^5$ Pa aufweist.

Eine weitere Unterstützung zum schnellen Druckaufbau ist möglich, da die ersten und/oder zweiten Nuten eine Tiefe aufweisen, welche sich vom Fußbereich zum Kopfbereich ändert. Dabei wird die Tiefe vom Fußbereich zum Kopfbereich kleiner. Besonders bevorzugt nimmt die Tiefe in Richtung zum Kopfbereich der Nuten kontinuierlich ab. Alternativ nimmt die Tiefe vom Fußbereich zum Kopfbereich stufenförmig ab. Weiter bevorzugt ist ein tangentialer Übergang des Kopfbereichs auf die Gleitfläche des Gleitrings vorgesehen.

Weiter bevorzugt ist der vierte Radius R14, auf welchem die Kopfbereiche der zweiten Nuten angeordnet sind, um maximal 20% kleiner als der zweite Radius R12, auf welchem die Kopfbereiche der ersten Nuten angeordnet sind. Dadurch kann eine Überdeckung der Nuten der Gleitringe erreicht werden, so dass sich ein besonders schneller, stufenartiger Druckaufbau ergibt, welcher eine schnelle Abdichtung der Gleitringdichtung nach einem Start der Gleitringdichtung ermöglicht. Besonders bevorzugt ist der vierte Radius R14 um max. 10% kleiner als der zweite Radius R12.

Gemäß einer weiteren bevorzugten Ausgestaltung der vorliegenden Erfindung sind die Nuten der Gleitringe sichelförmig mit einem bogenförmigen Verlauf ausgebildet. Dabei ist vorzugsweise eine Spitze der sichelförmigen Nuten am Kopfbereich der Nuten vorgesehen, so dass die Nuten bevorzugt sichelförmige V-Nuten sind.

Weiter bevorzugt sind die Nuten des rotierenden Gleitrings gegenläufig zu den Nuten des stationären Gleitrings angeordnet. Dadurch ergibt sich eine gekreuzte Anordnung der Nuten des rotierenden Gleitrings und des stationären Gleitrings. Damit kann die Gleitringdichtung auch unabhängig von einer Drehrichtung in beiden Drehrichtungen sicher abdichten.

Gemäß einer weiteren bevorzugten Ausgestaltung der Erfindung weisen die Nuten des rotierenden Gleitrings und des stationären Gleitrings eine Überdeckungsfläche von wenigstens 10% und vorzugsweise max. 40% der Nutflächen auf. Weiter bevorzugt ist die Überdeckungsfläche in einem Bereich von 20% bis 30%.

Gemäß einer weiteren bevorzugten Ausgestaltung der Erfindung weist einer der Gleitringe eine dritte Reihe einer Vielzahl von dritten Nuten auf. Dadurch kann eine zusätzliche Druckaufbaustufe im Dichtspalt zwischen den Gleitringen realisiert werden.

Weiter bevorzugt weist der andere der Gleitringe eine vierte Reihe einer Vielzahl von vierten Nuten auf. Dadurch weist jeder der beiden Gleitringe zwei Reihen von Nuten auf unterschiedlichen radialen Positionen auf, welche einen stufenweisen Druckaufbau im Dichtspalt, insbesondere während einer Anlaufphase der Gleitringdichtung ermöglichen.

Vorzugsweise ist eine geometrische Form der Nuten der Gleitringe gleich.

Gemäß einer weiteren bevorzugten Ausgestaltung der Erfindung weisen die Nuten des rotierenden Gleitrings und des stationären Gleitrings keine Überdeckungsflächen auf. D.h., die Radien der Fußbereiche und der Kopfbereiche sind so gewählt, dass in Radialrichtung zwischen den Nuten an beiden Gleitringen Gleitbereiche vorhanden sind. Auch ohne Überdeckung der Nutreihen in den Gleitflächen der Gleitringe kann ein Druckaufbau ermöglicht werden, da die entstehenden Druckfelder an den radialen Kopfbereichen der Nuten über den Radius der Kopfbereiche der Nuten reicht. Dadurch kann der Druckaufbau von der radial nachfolgenden Nutreihe weiter fortgesetzt werden.

Gemäß einer weiteren bevorzugten Ausgestaltung der vorliegenden Erfindung weist die Gleitringdichtung an einem inneren Radialrand der Gleitringe in Umfangsrichtung durchgehende dritte und vierte Gleitbereiche auf, welche einen zweiten Dichtbereich am inneren Umfang des Dichtspalts bilden. Dadurch wird eine Abdichtung der Gleitringdichtung im Stillstand weiter verbessert.

Weiter bevorzugt ist die Gleitringdichtung eine Gasdichtung, welche ein gasförmiges Medium gegenüber vorzugsweise der Atmosphäre abdichtet.

Nachfolgend werden bevorzugte Ausführungsbeispiele der Erfindung unter Bezugnahme auf die begleitende Zeichnung im Detail beschrieben. In der Zeichnung ist:

Fig. 1     eine schematische Schnittansicht einer Gleitringdichtung gemäß einem ersten Ausführungsbeispiel der Erfindung,

Fig. 2     eine schematische Draufsicht auf eine Gleitfläche eines rotierenden Gleitrings von Fig. 1,

Fig. 3     eine schematische Draufsicht auf eine Gleitfläche eines stationären Gleitrings von Fig. 1,

Fig. 4     eine schematische Schnittdarstellung durch Nuten im rotierenden Gleitring von Fig. 1,

Fig. 5     eine schematische Schnittdarstellung durch eine Nut im stationären Gleitring von Fig. 1,

Fig. 6     eine schematische Darstellung eines Überlappungsbereichs während einer Relativrotation zwischen dem rotierenden und dem stationären Gleitring von Fig. 1, und

Fig. 7     eine schematische Darstellung einer Anordnung von Nuten gemäß einem zweiten Ausführungsbeispiel der Erfindung,

Fig. 8     eine schematische Draufsicht auf eine Gleitfläche eines rotierenden Gleitrings gemäß einem dritten Ausführungsbeispiel der Erfindung, und

Fig. 9     eine schematische Draufsicht auf eine Gleitfläche eines stationären Gleitrings des dritten Ausführungsbeispiels.

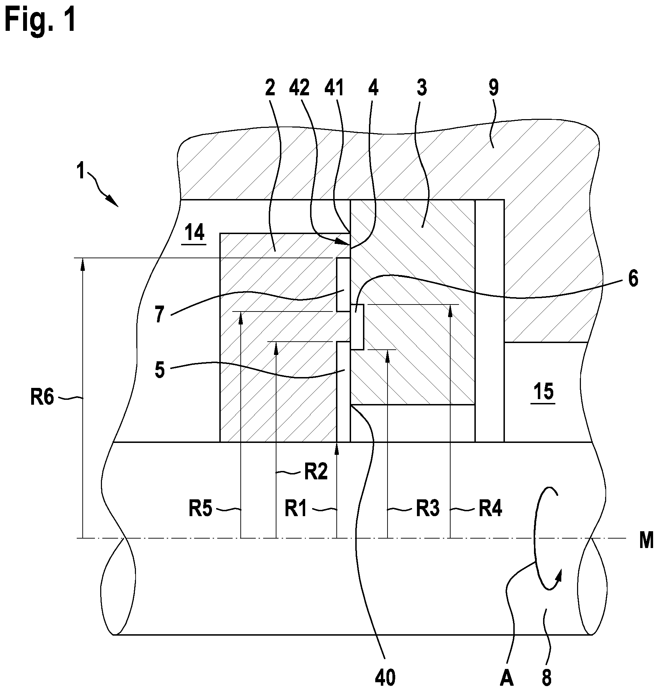

Nachfolgend wird unter Bezugnahme auf die Fig. 1 bis 6 eine Gleitringdichtung 1 gemäß einem ersten bevorzugten Ausführungsbeispiel der Erfindung im Detail beschrieben.

Wie aus Fig. 1 ersichtlich ist, umfasst die Gleitringdichtung 1 einen rotierenden Gleitring 2 und einen stationären Gleitring 3. Zwischen dem rotierenden Gleitring 2 und dem stationären Gleitring 2 ist ein Dichtspalt 4 definiert.

Die Gleitringdichtung 1 dichtet dabei einen Produktbereich 14, welcher unter einem hohen Druck steht, von einem Atmosphärenbereich 15 ab.

Die Gleitringdichtung 1 dieses Ausführungsbeispiels ist eine Gasdichtung, da das abzudichtende Medium im Produktbereich 14 ein Gas ist.

Der rotierende Gleitring 2 ist drehbar mit einer rotierenden Welle 8 verbunden. Das Bezugszeichen M kennzeichnet eine Mittellinie der Welle 8.

Der stationäre Gleitring 3 ist drehfest an einem Gehäuse 9 angeordnet.

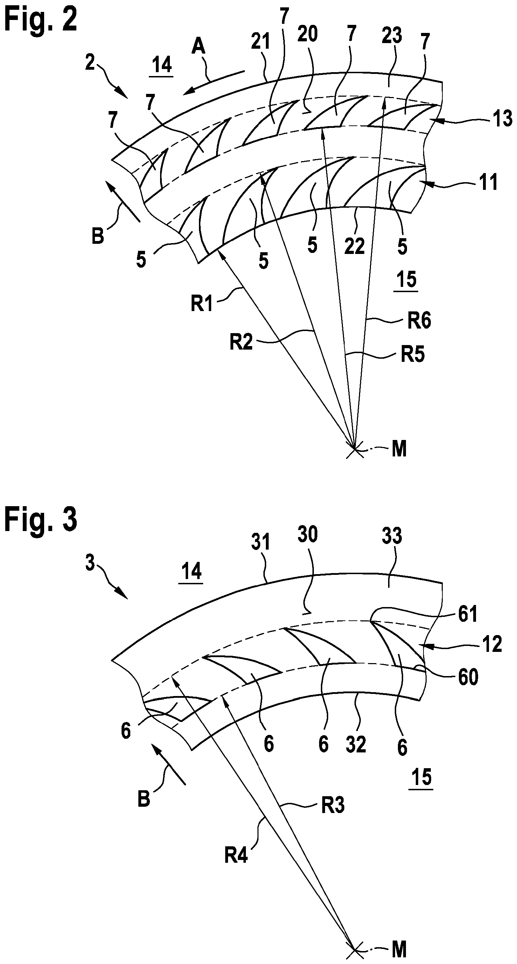

In den Fig. 2 bis 5 sind Details des rotierenden Gleitrings 2 und des stationären Gleitrings 3 dargestellt. Fig. 2 zeigt eine Draufsicht des rotierenden Gleitrings. Wie aus Fig. 2 ersichtlich ist, sind auf einer zum Dichtspalt 4 gerichteten Gleitfläche 20 des rotierenden Gleitrings 2 eine Vielzahl von Nuten vorgesehen. Die Nuten sind sichelförmig als V-Nut ausgebildet und sind in zwei Reihen angeordnet. Dabei bilden eine Vielzahl von ersten Nuten 5 eine erste Reihe 11 der Nuten. Eine Vielzahl von dritten Nuten 7 bildet eine dritte Reihe 13 von Nuten. In Fig. 3 ist eine Draufsicht einer Gleitfläche 30 des stationären Gleitrings 3 gezeigt. In der Gleitfläche 30 des stationären Gleitrings 3 ist eine zweite Reihe 12 von zweiten Nuten 6 angeordnet. Auch die zweiten Nuten 6 sind sichelförmig als V-Nut ausgebildet. Dabei ist eine Bogenform der sichelförmigen zweiten Nuten 6 entgegengesetzt zu einer Bogenform der ersten und dritten Nuten 5, 7 des rotierenden Gleitrings 2.

Der Überdeckungsbereich 10 beträgt vorzugsweise ca. 10% bis 20% der jeweiligen Nutflächen.

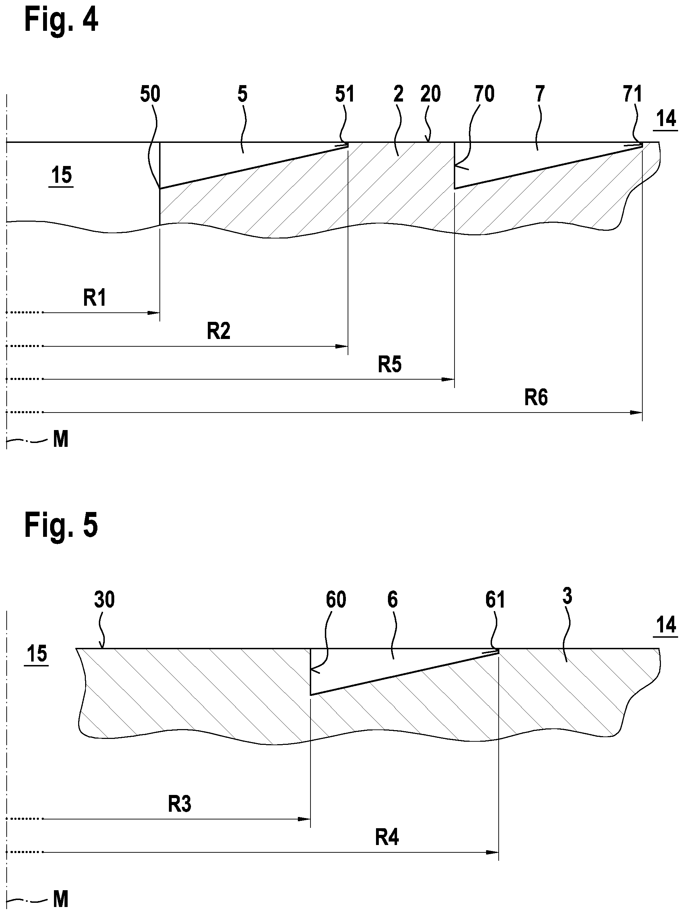

Fig. 4 zeigt eine Schnittansicht des rotierenden Gleitrings 2 entlang einer Mittellinie einer ersten Nut 5 und einer dritten Nut 7. Die erste Nut 5 weist dabei einen Fußbereich 50 mit einem ersten Radius R1 auf und einen Kopfbereich 51 mit einem zweiten Radius R2 auf. Wie aus Fig. 4 ersichtlich ist, ändert sich eine Tiefe der ersten Nut 5, ausgehend vom Fußbereich 50 zum Kopfbereich 51 in kontinuierlicher Weise. Dabei wird die Tiefe der ersten Nut 5 in Richtung zum Kopfbereich 51 kontinuierlich kleiner.

In gleicher Weise wie die ersten Nuten 5 sind auch die dritten Nuten 7 mit einem Fußbereich 70 und einem Kopfbereich 71 ausgebildet, wobei sich eine Tiefe der Nuten kontinuierlich vom Fußbereich 70 in Richtung zum Kopfbereich 71 verringert.

Fig. 5 zeigt eine Schnittansicht einer Mittellinie einer zweiten Nut 6. Die zweite Nut 6 weist ebenfalls einen Fußbereich 60 und einen Kopfbereich 61 auf. Eine Tiefe der zweiten Nut 6 ändert sich ebenfalls kontinuierlich vom Fußbereich 60 zum Kopfbereich 61. Dabei nimmt die Tiefe ausgehend vom Fußbereich 60 kontinuierlich zum Kopfbereich 61 ab.

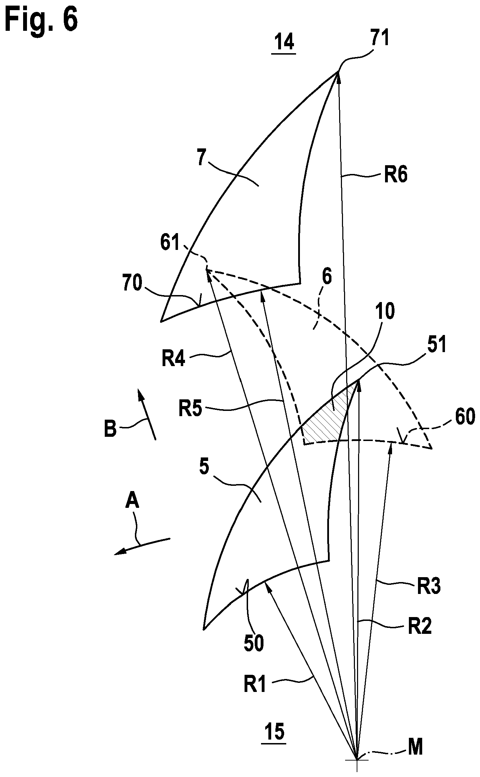

Es sei angemerkt, dass in diesen Ausführungsbeispielen alle Nuten 5, 6, 7 der drei Nutreihen gleich ausgebildet sind. Lediglich die Krümmung der zweiten Nuten 6 im stationären Gleitring 3 ist entgegengesetzt zur Krümmung der ersten und dritten Nuten 5, 7 im rotierenden Gleitring 2. Dadurch wird bei einer Draufsicht in Richtung der Mittellinie M auf den Dichtspalt eine sich kreuzende Anordnung der Nuten erreicht. Dies ist schematisch in Fig. 6 gezeigt. Dadurch ergibt sich bei einer Rotation des rotierenden Gleitrings (Pfeil A) bei jedem Überstreichen der Nuten ein Überdeckungsbereich 10. Eine Abdichtung ist unabhängig von einer Drehrichtung möglich.

Wie aus der Schnittansicht von Fig. 1 ersichtlich ist, ergibt sich somit eine stufenartige Nutanordnung der Nuten 5, 6, 7 in den Gleitflächen 20, 30 des rotierenden und stationären Gleitrings 2, 3. Wie aus den Fig. 2 und 3 ersichtlich ist, sind dabei die Fußbereiche 50 der ersten Nuten 5 auf dem ersten Radius R1 angeordnet, welcher kleiner ist als ein dritter Radius R3, auf welchem die Fußbereiche 60 der zweiten Nuten 6 angeordnet sind. Weiterhin sind die Kopfbereiche 51 der ersten Nuten 5 auf dem zweiten Radius R2 angeordnet, welcher kleiner ist als ein vierter Radius R4, auf welchem die Kopfbereiche 61 der zweiten Nuten 6 angeordnet sind. Weiterhin sind die Fußbereiche 70 der dritten Nuten 7 auf einem fünften Radius R5 angeordnet, welcher kleiner ist als der vierte Radius R4. Die Kopfbereiche 71 der dritten Nuten 7 sind auf einem sechsten Radius R6 angeordnet, welcher größer ist als der vierte Radius R4, auf welchem die Kopfbereiche 61 der zweiten Nuten 6 angeordnet sind.

Durch diese Anordnung der Nuten 5, 6, 7 ergibt sich der stufenartige Aufbau der Nutanordnung auf den Gleitflächen. Dadurch kann im Betrieb bei einem Beginn einer Rotation des rotierenden Gleitrings 2 aus einem Stillstand auf schnelle Weise Druckfelder an den jeweiligen Kopfbereichen der Nuten erzeugt werden, wobei ein ansteigender Druck, ausgehend von der inneren Radialseite 40 des Dichtspalts 4, am Atmosphärenbereich 15 zur äußeren Radialseite 41 des Dichtspalts 4 am Produktbereich 14 möglich ist. Die Druckaufbaurichtung ist in den Figuren durch den Pfeil B angedeutet.

Genauer erfolgt bei Beginn der Rotation ein erster Druckaufbau mit entsprechend gebildeten Druckfeldern im Bereich der Kopfbereiche 51 der ersten Nuten 5. Diese Druckfelder werden an den Fußbereich 60 der zweiten Nuten 6 übergeben, von welchem dann durch die Rotation weitere Druckfelder jeweils im Bereich der Kopfbereiche 61 der zweiten Nuten 6 erzeugt werden. Diese zweiten Druckfelder werden dann in gleicher Weise an die Fußbereiche 70 der dritten Nuten 7 übergeben.

Dadurch wird ein sehr schneller Druckaufbau zu Beginn der Rotation des rotierenden Gleitrings 2 erreicht, so dass ein schnelles Abheben der Gleitflächen 20, 30 voneinander erreicht wird und trotzdem höchstens eine minimale Leckage, ausgehend vom Produktbereich 14 über den Dichtspalt 4 zum Atmosphärenbereich 15 auftritt. Im Dichtspalt 4 herrscht somit ein ansteigender Druck von der inneren Radialseite 40 zur äußeren Radialseite 41 des Dichtspalts.

Durch die Erzeugung eines umlaufend kontinuierlichen Überdruckgebiets jeweils im Bereich der Kopfbereiche der Nuten 5, 6, 7 wird somit ein schneller Druckaufbau im Dichtspalt 4 unterstützt und eine mögliche Leckage bei einem Anlaufen des rotierenden Gleitrings auf ein Minimum reduziert.

Somit kann gezielt eine Abdichtwirkung gegen hohe Drücke durch Rotation erreicht werden, indem in beiden Gleitflächen 20, 30 Nuten vorgesehen sind, welche umlaufend in Reihe auf den Gleichflächen ausgebildet sind. Durch die gestaffelte Anordnung der sich einander überdeckenden Nuten werden Überdeckungsbereiche gebildet, an welchen gezielt ein Druckaufbau in Stufen ermöglicht wird. Dadurch wird eine deutlich reduzierte Leckage bei einem Anfahren des rotierenden Gleitrings erreicht. Durch die Nutanordnung können im Bereich des Dichtspalts 4 Verdichtungsverhältnisse von 1:100 oder mehr, ausgehend vom Druck im Atmosphärenbereich 15, erreicht werden, was üblicherweise deutlich über einem Druckunterschied zwischen dem Produktbereich 14 und dem Atmosphärenbereich 15 liegt.

Wie weiter aus den Fig. 2 und 3 ersichtlich ist, sind die erste Reihe 11 von ersten Nuten 5 und die dritte Reihe 13 von dritten Nuten 7 derart angeordnet, dass am äußeren Radialrand 21 ein erster äußerer Gleitbereich 23 ausgebildet ist. Am stationären Gleitring 3 ist am äußeren Radialrand 31 ein zweiter äußerer Gleitbereich 33 ausgebildet. Somit bilden die jeweils umlaufenden, nutfreien Gleitbereiche 23, 33 im Stillstand der Gleitringdichtung einen äußeren Dichtdamm zwischen dem ersten Gleitbereich 23 und dem zweiten Gleitbereich 33. Somit sind die Nuten derart ausgebildet, dass diese nicht bis zu dem äußeren Radialrand reichen, so dass durch die umlaufenden Gleitbereiche 23, 33 ein äußerer Dichtdamm 42 ermöglicht wird, welcher eine mögliche Leckage bei einem Anlaufen zusätzlich reduziert. Der äußere Dichtdamm 42 ist schematisch in Fig. 1 dargestellt.

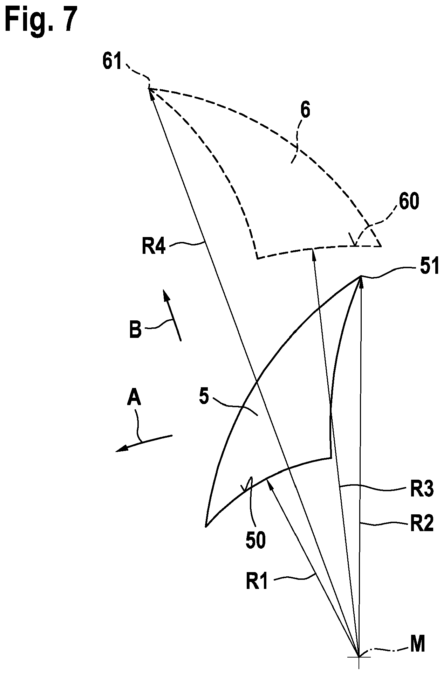

Fig. 7 zeigt schematisch eine Gleitringdichtung gemäß einem zweiten Ausführungsbeispiel der Erfindung. Die Gleitringdichtung des zweiten Ausführungsbeispiels entspricht im Wesentlichen dem ersten Ausführungsbeispiel, wobei im Unterschied zum ersten Ausführungsbeispiel kein Überdeckungsbereich zwischen den Reihen von ersten Nuten 5 und zweiten Nuten 6 vorhanden ist. Somit ist der zweite Radius R2 an den Kopfbereichen 51 der ersten Nuten 5 immer kleiner als der dritte Radius R3 an den Fußbereichen 60 der zweiten Nuten 6. Trotzdem ist die erfindungsgemäße Idee des stufenweisen Druckaufbaus möglich, da durch den Druckaufbau in den ersten Nuten 5 an den Kopfbereichen 51 ein Druckfeld aufgebaut wird, welches über die Kopfbereiche 51 radial nach außen ragt. Damit befindet sich das Druckfeld im Bereich der Fußbereiche 60 der Reihe von zweiten Nuten 6. Dadurch kann ein kontinuierlicher weiterer Druckaufbau durch die Reihe von zweiten Nuten 6 ermöglicht werden. Es sei angemerkt, dass vorzugsweise ein radialer Abstand zwischen den Kopfbereichen 51 und den Fußbereichen 60 derart gewählt ist, dass der Abstand maximal 50% einer radialen Ausdehnung der ersten Nut 5 beträgt. Mit anderen Worten ist vorzugsweise die Ungleichung

$$R3 - R2 \leq \frac{1}{2} \cdot (R2 - R1)$$

erfüllt. Ansonsten entspricht dieses Ausführungsbeispiel dem vorhergehenden Ausführungsbeispiel, so dass auf die dort gegebene Beschreibung verwiesen werden kann.

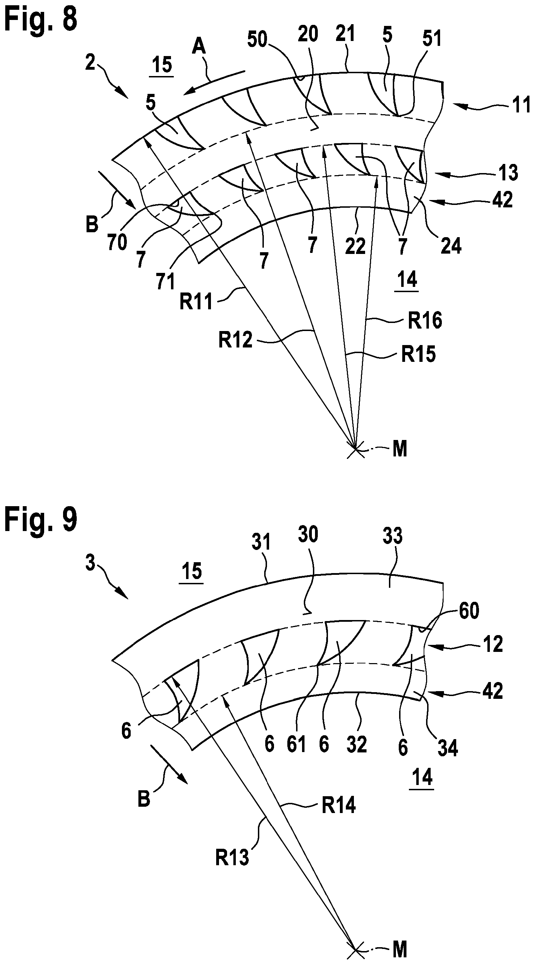

Die Fig. 8 und 9 zeigen eine Gleitringdichtung gemäß einem dritten Ausführungsbeispiel der Erfindung. Gleiche bzw. funktional gleiche Teile sind mit den gleichen Bezugszeichen bezeichnet.

Das dritte Ausführungsbeispiel entspricht im Wesentlichen dem ersten Ausführungsbeispiel, wobei im Unterschied zum ersten Ausführungsbeispiel eine Druckaufbaurichtung B umgekehrt ist. Wie aus den Fig. 8 und 9 ersichtlich ist, ist beim dritten Ausführungsbeispiel der Produktbereich 14 radial innerhalb der Gleitflächen der Gleitringe 2, 3 vorgesehen und der Atmosphärenbereich 15 radial außerhalb der Gleitringe 2, 3 angeordnet. Dadurch ergibt sich eine Druckaufbaurichtung B, welche in Radialrichtung von außen nach innen verläuft.

Wie aus Fig. 8 ersichtlich ist, sind im rotierenden Gleitring 2 eine erste Reihe 11 von ersten Nuten und eine dritte Reihe 13 von dritten Nuten angeordnet. Im stationären Gleitring 3, wie in Fig. 9 gezeigt, ist eine zweite Reihe 12 von zweiten Nuten ausgebildet. Die Nuten der drei Reihen 11, 12, 13 sind dabei als sichelförmige V-Nuten vorgesehen. Aufgrund der im Vergleich mit dem ersten Ausführungsbeispiel umgekehrten Druckaufbaurichtung B sind auch jeweils die Fußbereiche und Kopfbereiche der Nuten in Radialrichtung umgekehrt. Wie aus Fig. 8 ersichtlich ist, reichen dabei die Fußbereiche 50 der ersten Nuten 5 bis zum äußeren Radialrand 21 des rotierenden Gleitrings. Allerdings reichen die dritten Nuten 7 des rotierenden Gleitrings 2 nicht bis zum inneren Radialrand 22 des rotierenden Gleitrings. Ähnlich reichen auch die Kopfbereiche 61 der zweiten Nuten 6 nicht bis zum inneren Radialrand 32 des stationären Gleitrings. Dadurch ergibt sich ein innerer Gleitbereich 24 am rotierenden Gleitring und ein innerer Gleitbereich 34 am stationären Gleitring 3. Somit wird an der radialen Innenseite der Gleitflächen ein Dichtdamm durch die beiden inneren Gleitbereiche 24, 34 bereitgestellt, welcher insbesondere im stehenden Zustand der Gleitringdichtung eine zusätzliche Abdichtfunktion gegenüber dem Produktbereich 14 bereitstellt.

Wie im ersten Ausführungsbeispiel ergeben sich weder zwischen den ersten Nuten 5 und den zweiten Nuten 6 Überdeckungsbereiche, und zwischen den zweiten Nuten 6 und den dritten Nuten 7 ebenfalls Überdeckungsbereiche. Wie aus Fig. 8 ersichtlich ist, sind dabei Fußbereiche 50 der ersten Nuten 5 auf einem ersten Radius R11 angeordnet und die Kopfbereiche 51 auf einem zweiten Radius R12. Die Fußbereiche 70 der dritten Nuten 7 sind auf einem fünften Radius R15 angeordnet und die Kopfbereiche 71 sind auf einem sechsten Radius R16 angeordnet. Wie aus Fig. 9 ersichtlich ist, sind die Fußbereiche 60 der zweiten Nuten 6 auf einem dritten Radius R13 angeordnet und die Kopfbereiche 61 auf einem vierten Radius R14. Da es sich zwischen den ersten Nuten 5 und den zweiten Nuten 6 Überdeckungsbereiche ergeben, ist somit ein dritter Radius R13 größer als ein zweiter Radius R12. Weiterhin sind für die Überdeckungsbereiche zwischen den zweiten Nuten 6 und den dritten Nuten 7 der vierte Radius R14 der Kopfbereiche 61 kleiner als der fünfte Radius R15 der Fußbereiche 70 der dritten Nuten 7.

Wie aus Fig. 8 ersichtlich ist, reichen die Fußbereiche 50 der ersten Nuten 5 bis zum äußeren Radialrand 21 des rotierenden Gleitrings. Dagegen reichen die Kopfbereiche 71 der dritten Nuten 7 nicht bis zum inneren Radialrad 22 des rotierenden Gleitrings. Wie aus Fig. 9 ersichtlich ist, reichen die Fußbereiche 60 der zweiten Nuten 6 nicht bis zum äußeren Radialrand 31 des stationären Gleitrings. Auch reichen die Kopfbereiche 61 der zweiten Nuten 6 nicht bis zum inneren Radialrand 32 des stationären Gleitrings. Dadurch wird ein radial innerer Dichtdamm 42 realisiert.

Zu den beschriebenen Ausführungsbeispielen sei angemerkt, dass es selbstverständlich auch möglich ist, dass die gestufte Anordnung der Reihen von einer Vielzahl von Nuten auch umgekehrt auf den Gleitflächen der Gleitringe vorgesehen sein kann. D.h. die erste und dritte Reihe 11, 13 von Nuten kann auch auf dem stationären Gleitring 3 vorgesehen werden und die zweite Reihe 12 von Nuten kann dann entsprechend auf dem rotierenden Gleitring 2 angeordnet werden. Auch kann die Anzahl der Reihen der Nuten in den Gleitflächen variieren. Wichtig für die Erfindung ist hierbei, dass die Reihen von Nuten auf den beiden Gleitflächen abwechselnd in Radialrichtung von innen nach außen jeweils abwechselnd auf unterschiedlichen mittleren Nutendurchmessern eingeordnet sind, um den stufenweisen Druckaufbau im Dichtspalt von innen nach außen zu erreichen.

Dabei können sich bei Rotation die Nuten teilweise überdecken oder alternativ auch keine Überdeckung vorliegen. Auch sind Mischanordnungen, d.h. dass sich zwei Reihen von Nuten teilweise überdecken und zwei Reihen von Nuten nicht überdecken, bei einer Gleitringdichtung möglich.

Bezugszeichenliste

| | |
|---|---|
| 1 | Gleitringdichtung |
| 2 | rotierender Gleitring |
| 3 | stationärer Gleitring |
| 4 | Dichtspalt |
| 5 | erste Nuten |
| 6 | zweite Nuten |
| 7 | dritte Nuten |
| 8 | Welle |
| 9 | Gehäuse |
| 10 | Überdeckungsbereich |
| 11 | erste Reihe von ersten Nuten |
| 12 | zweite Reihe von zweiten Nuten |
| 13 | dritte Reihe von dritten Nuten |
| 14 | Produktbereich |
| 15 | Atmosphärenbereich |
| 20 | Gleitfläche des rotierenden Gleitrings |
| 21 | äußerer Radialrand des rotierenden Gleitrings |
| 22 | innerer Radialrand des rotierenden Gleitrings |
| 23 | erster Gleitbereich der Gleitfläche |
| 24 | innerer Gleitbereich des stationären Gleitrings |
| 30 | Gleitfläche des stationären Gleitrings |
| 31 | äußerer Radialrand des stationären Gleitrings |
| 32 | innerer Radialrand des stationären Gleitrings |
| 33 | zweiter Gleitbereich des stationären Gleitrings |
| 34 | innerer Gleitbereich des stationären Gleitrings |
| 40 | innere Radialseite des Dichtspalts |
| 41 | äußere Radialseite des Dichtspalts |
| 42 | Dichtdamm |
| 50 | Fußbereich |
| 51 | Kopfbereich |
| 60 | Fußbereich |
| 61 | Kopfbereich |
| 70 | Fußbereich |
| 71 | Kopfbereich |
| A | Rotationsrichtung |
| B | Druckaufbaurichtung |
| M | Mittellinie |
| R1 | erster Radius der Fußbereiche 50 |
| R2 | zweiter Radius der Kopfbereiche 51 |
| R3 | dritter Radius der Fußbereiche 60 |
| R4 | vierter Radius der Kopfbereiche 61 |
| R5 | fünfter Radius der Fußbereiche 70 |
| R6 | sechster Radius der Kopfbereiche 71 |
| R11 | erster Radius der Fußbereiche 50 |
| R12 | zweiter Radius der Kopfbereiche 51 |
| R13 | dritter Radius der Fußbereiche 60 |
| R14 | vierter Radius der Kopfbereiche 61 |
| R15 | fünfter Radius der Fußbereiche 70 |
| R16 | sechster Radius der Kopfbereiche 71 |

**Patentansprüche**

1. Gleitringdichtung, umfassend:

- einen rotierenden Gleitring (2) und einen stationären Gleitring (3), welche zwischen sich einen Dichtspalt (4) definieren,
- wobei einer der Gleitringe (2) wenigstens eine erste Reihe (11) einer Vielzahl von ersten Nuten (5) mit einem Fußbereich (50) auf einem ersten Radius (R1) und einem Kopfbereich (51) auf einem zweiten Radius (R2) aufweist, wobei zwischen den Kopfbereichen der radial äußersten Reihe von Nuten des Gleitrings (2) und einem äußeren Radialrand (21) des Gleitrings (2) ein erster umlaufender Gleitbereich (23) vorhanden ist,
- wobei der andere der Gleitringe (3) wenigstens eine zweite Reihe (12) einer Vielzahl von zweiten Nuten (6) mit einem Fußbereich (60) auf einem dritten Radius (R3) und einem Kopfbereich (61) auf einem vierten Radius (R4) aufweist, wobei zwischen den Kopfbereichen der radial äußersten Reihe von Nuten des Gleitrings (3) und einem äußeren Radialrand (31) des Gleitrings (3) ein zweiter umlaufender Gleitbereich (33) vorhanden ist,
- wobei der erste Radius (R1) kleiner ist als der dritte Radius (R3),
- wobei der zweite Radius (R2) kleiner ist als der vierte Radius (R4),
- **dadurch gekennzeichnet, dass**
die ersten und zweiten Nuten (5, 6) eine Tiefe aufweisen, welche sich jeweils von einem Fußbereich zu einem Kopfbereich ändert, und
- wobei sich die Tiefe der Nuten ausgehend vom Fußbereich in Richtung zum Kopfbereich reduziert.

2. Gleitringdichtung nach Anspruch 1, wobei der vierte Radius (R4) um maximal 20% größer ist als der zweite Radius (R2).

3. Gleitringdichtung, umfassend:

- einen rotierenden Gleitring (2) und einen stationären Gleitring (3), welche zwischen sich einen Dichtspalt (4) definieren,
- wobei einer der Gleitringe (2) wenigstens eine erste Reihe (11) einer Vielzahl von ersten Nuten (5) mit einem Fußbereich (50) auf einem ersten Radius (R11) und einem Kopfbereich (51) auf einem zweiten Radius (R12) aufweist, wobei zwischen den Kopfbereichen der radial innersten Reihe von Nuten des Gleitrings (2) und einem inneren Radialrand (22) des Gleitrings (2) ein erster umlaufender Gleitbereich (24) vorhanden ist,
- wobei der andere der Gleitringe (3) wenigstens eine zweite Reihe (12) einer Vielzahl von zweiten Nuten (6) mit einem Fußbereich (60) auf einem dritten Radius (R13) und einem Kopfbereich (61) auf einem vierten Radius (R14) aufweist, wobei zwischen den Kopfbereichen der radial innersten Reihe von Nuten des Gleitrings (3) und einem inneren Radialrand (32) des Gleitrings (3) ein zweiter umlaufender Gleitbereich (34) vorhanden ist,
- wobei der erste Radius (R11) größer ist als der dritte Radius (R13),
- wobei der zweite Radius (R12) größer ist als der vierte Radius (R14),
- **dadurch gekennzeichnet, dass**
die ersten und zweiten Nuten (5, 6) eine Tiefe aufweisen, welche sich jeweils von einem Fußbereich zu einem Kopfbereich ändert, und
- wobei sich die Tiefe der Nuten ausgehend vom Fußbereich in Richtung zum Kopfbereich reduziert.

**4.** Gleitringdichtung nach Anspruch 3, wobei der vierte Radius (R14) um maximal 20% kleiner ist als der zweite Radius (R12).

**5.** Gleitringdichtung nach einem der vorhergehenden Ansprüche, wobei die Nuten sichelförmig mit einem bogenförmigen Verlauf ausgebildet sind.

**6.** Gleitringdichtung nach Anspruch 5, wobei die Nuten sichelförmige V-Nuten mit einer Spitze am Kopfbereich sind.

**7.** Gleitringdichtung nach Anspruch 5 oder 6, wobei die Nuten (5, 7) des rotierenden Gleitrings (2) gegenläufig zu den Nuten (6) des stationären Gleitrings (3) angeordnet sind.

**8.** Gleitringdichtung nach einem der vorhergehenden Ansprüche, wobei die Nuten des rotierenden Gleitrings (2) und des stationären Gleitrings (3) eine Überdeckungsfläche (10) von wenigstens 10% der Nutflächen aufweisen.

**9.** Gleitringdichtung nach einem der Ansprüche 1 bis 7, wobei die Nuten des rotierenden Gleitrings (2) und des stationären Gleitrings (3) keine Überdeckungsfläche aufweisen.

**10.** Gleitringdichtung nach einem der vorhergehenden Ansprüche, wobei einer der Gleitringe (2) eine dritte Reihe (13) einer Vielzahl von dritten Nuten (7) aufweist.

**11.** Gleitringdichtung nach Anspruch 10, wobei der andere der Gleitringe (3) eine vierte Reihe einer Vielzahl von vierten Nuten aufweist.

**12.** Gleitringdichtung nach einem der vorhergehenden Ansprüche, wobei eine geometrische Form aller Nuten auf einem Gleitring gleich ist.

**13.** Gleitringdichtung nach einem der vorhergehenden Ansprüche, wobei die Gleitringdichtung eine Gasdichtung zur Abdichtung von gasförmigen Medien ist.

**Claims**

**1.** A mechanical seal comprising:

- a rotating slide ring (2) and a stationary slide ring (3) defining a sealing gap (4) therebetween,
- wherein one of the slide rings (2) comprises at least a first row (11) of a plurality of first grooves (5) having a foot region (50) on a first radius (R1) and a head region (51) on a second radius (R2), a first circumferential sliding region (23) being provided between the head regions of the radially outermost row of grooves of the slide ring (2) and an external radial edge (21) of the slide ring (2),
- the other of the slide rings (3) having at least a second row (12) of a plurality of second grooves (6) with a foot region (60) on a third radius (R3) and a head region (61) on a fourth radius (R4), a second circumferential sliding region (33) being present between the head regions of the radially outermost row of grooves of the slide ring (3) and an outer radial edge (31) of the slide ring (3),
- wherein the first radius (R1) is smaller than the third radius (R3),
- wherein the second radius (R2) is smaller than the fourth radius (R4),
- **characterized in that** the first and second grooves (5, 6) have a respective depth which changes from a foot region to a head region, and
- wherein the depth of the grooves decreases starting from the foot region towards the head region.

**2.** The mechanical seal according to claim 1, wherein the fourth radius (R4) is at most 20% larger than the second radius (R2).

**3.** A mechanical seal comprising:

- a rotating slide ring (2) and a stationary slide ring (3) defining a sealing gap (4) therebetween,
- one of the slide rings (2) having at least a first row (11) of a plurality of first grooves (5) having a foot region (50) on a first radius (R11) and a head region (51) on a second radius (R12), a first circumferential slide region (24) being present between the head regions of the radially innermost row of grooves of said slide ring (2) and an internal radial edge (22) of the slide ring (2)

- the other of the slide rings (3) having at least a second row (12) of a plurality of second grooves (6) with a foot region (60) on a third radius (R13) and a head region (61) on a fourth radius (R14), a second circumferential slide region (34) being present between the head regions of the radially innermost row of grooves of the slide ring (3) and an *internal* radial edge (32) of the slide ring (3)
- wherein the first radius (R11) is larger than the third radius (R13),
- wherein the second radius (R12) is larger than the fourth radius (R14),
- **characterized in that** the first and second grooves (5, 6) have a respective depth which changes from a foot region to a head region, and
- wherein the depth of the grooves decreases starting from the foot region towards the head region.

4. The mechanical seal according to claim 3, wherein the fourth radius (R14) is smaller than the second radius (R12) by a maximum of 20%.

5. The mechanical seal according to one of the preceding claims, wherein the grooves are formed in a crescent shape having an arcuate course.

6. The mechanical seal according to claim 5, wherein the grooves are sickle-shaped V-grooves having a tip at the head region.

7. The mechanical seal according to claims 5 or 6, wherein the grooves (5, 7) of the rotating slide ring (2) are arranged in the opposite direction to the grooves (6) of the stationary slide ring (3).

8. The mechanical seal according to one of the preceding claims, wherein the grooves of the rotating slide ring (2) and the stationary slide ring (3) have an overlapping area (10) of at least 10% of the groove regions.

9. The mechanical seal according to one of the claims 1 to 7, wherein the grooves of the rotating slide ring (2) and the stationary slide ring (3) have no overlap region.

10. The mechanical seal according to one of the preceding claims, wherein one of the slide rings (2) has a third row (13) of a plurality of third grooves (7).

11. The mechanical seal according to claim 10, wherein the other one of the slide rings (3) has a fourth row of a plurality of fourth grooves.

12. The mechanical seal according to one of the preceding claims, wherein a geometrical shape is the same for all grooves located on a slide ring.

13. The mechanical seal according to one of the preceding claims, wherein the mechanical seal is a gas seal for sealing gaseous media.

**Revendications**

1. Joint d'étanchéité à bague de glissement comprenant :

- une bague de glissement (2) rotative et une bague de glissement (3) stationnaire qui définissent entre elles une fente d'étanchéité (4),
- dans lequel une des bagues de glissement (2) présente au moins une première rangée (11) d'une pluralité de premières rainures (5) avec une zone de pied (50) sur un premier rayon (R1) et une zone de tête (51) sur un deuxième rayon (R2), dans lequel une première zone de glissement (23) tournante est présente entre les zones de tête de la rangée radialement la plus extérieure de rainures de la bague de glissement (2) et un bord radial (21) extérieur de la bague de glissement (2),
- dans lequel l'autre des bagues de glissement (3) présente au moins une deuxième rangée (12) d'une pluralité de deuxièmes rainures (6) avec une zone de pied (60) sur un troisième rayon (R3) et une zone de tête (61) sur un quatrième rayon (R4), dans lequel une seconde zone de glissement (33) tournante est présente entre les zones de tête de la rangée radialement la plus extérieure de rainures de la bague de glissement (3) et un bord radial (31) extérieur de la bague de glissement (3),
- dans lequel le premier rayon (R1) est inférieur au troisième rayon (R3),
- dans lequel le deuxième rayon (R2) est inférieur au quatrième rayon (R4),
- **caractérisé en ce que**
les première et deuxième rainures (5, 6) présentent une profondeur qui se modifie respectivement d'une zone de pied à une zone de tête, et
- dans lequel la profondeur des rainures se réduit à partir de la zone de pied en direction de la zone de tête.

2. Joint d'étanchéité à bague de glissement selon la revendication 1, dans lequel le quatrième rayon (R4) est supérieur de 20 % au maximum au deuxième rayon (R2).

3. Joint d'étanchéité à bague de glissement comprenant :

- une bague de glissement (2) rotative et une bague de glissement (3) stationnaire qui définissent entre elles une fente d'étanchéité (4),

- dans lequel une des bagues de glissement (2) présente au moins une première rangée (11) d'une pluralité de premières rainures (5) avec une zone de pied (50) sur un premier rayon (R11) et une zone de tête (51) sur un deuxième rayon (R12), dans lequel une première zone de glissement (24) tournante est présente entre les zones de tête de la première rangée radialement la plus intérieure de rainures de la bague de glissement (2) et un bord radial (22) intérieur de la bague de glissement (2),

- dans lequel l'autre des bagues de glissement (3) présente au moins une deuxième rangée (12) d'une pluralité de deuxièmes rainures (6) avec une zone de pied (60) sur un troisième rayon (R13) et une zone de tête (61) sur un quatrième rayon (R14), dans lequel une seconde zone de glissement (34) tournante est présente entre les zones de tête de la rangée radialement la plus intérieure de rainures de la bague de glissement (3) et un bord radial (32) intérieur de la bague de glissement (3),

- dans lequel le premier rayon (R11) est supérieur au troisième rayon (R13),

- dans lequel le deuxième rayon (R12) est supérieur au quatrième rayon (R14),

- **caractérisé en ce que**

les première et deuxième rainures (5, 6) présentent une profondeur qui se modifie respectivement d'une zone de pied à une zone de tête, et

- dans lequel la profondeur des rainures se réduit à partir de la zone de pied en direction de la zone de tête.

4. Joint d'étanchéité à bague de glissement selon la revendication 3, dans lequel le quatrième rayon (R14) est inférieur de 20 % au maximum au deuxième rayon (R12).

5. Joint d'étanchéité à bague de glissement selon l'une quelconque des revendications précédentes, dans lequel les rainures sont réalisées en forme de faucille avec une étendue arquée.

6. Joint d'étanchéité à bague de glissement selon la revendication 5, dans lequel les rainures sont des rainures en V en forme de faucille avec une pointe au niveau de la zone de tête.

7. Joint d'étanchéité à bague de glissement selon la revendication 5 ou 6, dans lequel les rainures (5, 7) de la bague de glissement (2) rotative sont agencées en sens inverse des rainures (6) de la bague de glissement (3) stationnaire.

8. Joint d'étanchéité à bague de glissement selon l'une quelconque des revendications précédentes, dans lequel les rainures de la bague de glissement (2) rotative et de la bague de glissement (3) stationnaire présentent une surface de recouvrement (10) d'au moins 10 % des surfaces de rainure.

9. Joint d'étanchéité à bague de glissement selon l'une quelconque des revendications 1 à 7, dans lequel les rainures de la bague de glissement (2) rotative et de la bague de glissement (3) stationnaire ne présentent aucune surface de recouvrement.

10. Joint d'étanchéité à bague de glissement selon l'une quelconque des revendications précédentes, dans lequel une des bagues de glissement (2) présente une troisième rangée (13) d'une pluralité de troisièmes rainures (7).

11. Joint d'étanchéité à bague de glissement selon la revendication 10, dans lequel l'autre des bagues de glissement (3) présente une quatrième rangée d'une pluralité de quatrièmes rainures.

12. Joint d'étanchéité à bague de glissement selon l'une quelconque des revendications précédentes, dans lequel une forme géométrique de toutes les rainures sur une bague de glissement est identique.

13. Joint d'étanchéité à bague de glissement selon l'une quelconque des revendications précédentes, dans lequel le joint d'étanchéité à bague de glissement est un joint d'étanchéité au gaz pour rendre étanche des milieux gazeux.

# Fig. 1

Fig. 2

Fig. 3

EP 4 127 528 B1

# Fig. 4

# Fig. 5

# Fig. 6

# Fig. 7

## Fig. 8

## Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3957276 A